(19) Europäisches Patentamt
European Patent Office
Office européen des brevets

(11) **EP 1 914 065 B1**

(12) **EUROPEAN PATENT SPECIFICATION**

(45) Date of publication and mention of the grant of the patent:
**16.10.2013  Bulletin 2013/42**

(51) Int Cl.:
*B32B 15/08* [(2006.01)]   *B32B 15/09* [(2006.01)]
*B32B 15/18* [(2006.01)]   *B32B 27/06* [(2006.01)]
*B32B 27/36* [(2006.01)]   *B32B 1/02* [(2006.01)]

(21) Application number: **06796479.1**

(22) Date of filing: **10.08.2006**

(86) International application number:
**PCT/JP2006/316122**

(87) International publication number:
**WO 2007/020951 (22.02.2007 Gazette 2007/08)**

(54) **LAMINATE STEEL SHEET FOR TWO-PIECE CAN, METHOD FOR MANUFACTURE OF TWO-PIECE CAN, AND TWO-PIECE LAMINATE CAN**

LAMINIERTES STAHLBLECH FÜR ZWEITEILIGE DOSE, HERSTELLUNGSVERFAHREN FÜR ZWEITEILIGE DOSE UND ZWEITEILIGE LAMINIERTE DOSE

FEUILLE D'ACIER STRATIFIÉE POUR BOÎTE EN DEUX PARTIES, PROCÉDÉ DE FABRICATION DE BOÎTE EN DEUX PARTIES, ET BOÎTE STRATIFIÉE EN DEUX PARTIES

(84) Designated Contracting States:
**DE FR GB NL PT**

(30) Priority:  **12.08.2005   JP 2005234562**

(43) Date of publication of application:
**23.04.2008   Bulletin 2008/17**

(73) Proprietor: **JFE Steel Corporation
Tokyo, 100-0011 (JP)**

(72) Inventors:
• **KUBO, Hiroshi
Chiyoda-ku, Tokyo 100-0011 (JP)**
• **KOJIMA, Katsumi
Chiyoda-ku, Tokyo 100-0011 (JP)**
• **NISHIHARA, Yuka
Chiyoda-ku Tokyo 100-0011 (JP)**
• **YASUE, Yoshihiko
Chiyoda-ku Tokyo 100-0011 (JP)**
• **IWASA, Hiroki
Chiyoda-ku Tokyo 100-0011 (JP)**

(74) Representative: **Henkel, Breuer & Partner
Patentanwälte
Maximiliansplatz 21
80333 München (DE)**

(56) References cited:
**EP-A- 0 608 632     EP-A- 0 754 546
EP-A- 1 149 772     EP-A- 1 535 953
EP-A- 1 914 024     EP-A- 1 914 026
EP-A- 1 914 064     JP-A- 07 178 485
JP-A- 07 223 645**

• **DATABASE WPI Week 200446 Thomson Scientific, London, GB; AN 2004-483075 XP002544261 & JP 2004 148324 A (TOYO SEIKAN KAISHA LTD) 27 May 2004 (2004-05-27)**
• **DATABASE WPI Week 199729 Thomson Scientific, London, GB; AN 1997-315529 XP002544262 & JP 09 123352 A (KANEBO LTD) 13 May 1997 (1997-05-13)**

**Description**

**FIELD OF THE INVENTION**

The present invention relates to a method for manufacturing a two-piece can of high strain level, such as aerosol can, and a two-piece laminated can of high strain level.

**DESCRIPTION OF THE RELATED ARTS**

Metal containers of aerosol are largely grouped into two-piece can and three-piece can. The two-piece can is a can structured by two segments, namely the can body integrated with can bottom and the can end. The three-piece can is a can structured by three segments, namely the can body, the top end, and the bottom end. The two-piece can has no seam (welded part) so that it gives beautiful appearance. However, the two-piece can generally requires high strain. Since the three-piece can has the seam, it is inferior in appearance to the two-piece can. The three-piece can, however, generally requires low strain. Therefore, two-piece can is widely used for small capacity and high grade goods in the market, and the three-piece can is generally used for large capacity and low price goods.

The metal base material for aerosol two-piece can usually adopts expensive and thick aluminum sheet, and rarely uses steel sheet base material such as inexpensive and thin sheet including tinplate and tin-free steel. The reason is that, since the aerosol two-piece can requires high strain, drawing and DI working are difficult to apply, while aluminum allows applying impact-molding applicable to soft metallic materials. In this situation, if the steel sheet base material such as tinplate and tin-free steel which are inexpensive and high strength even with a thin sheet thickness is applicable, the industrial significance becomes remarkably high.

Although there were many proposals of drawing and DI working methods of laminated steel sheet, there is no proposal of the method for manufacturing cans such as aerosol two-piece can of large drawing ratio and high elongation in the can height direction.

For example, Patent Documents 1 to 3 disclose the working methods for drawing and drawing-ironing for resin-laminated metal sheet. The strain level described in Patent Documents 1 to 3, (drawing ratio in Patent Documents 1 to 3), is lower than the range specified by the present invention. This is because Patent Documents 1 to 3 place the target to beverage cans, food cans, and the like, and beverage cans and food cans are the cans requiring lower strain than the range of strain level specified by the present invention.

Patent Documents 2 and 3 describe that, aiming to gain the prevention of delamination of resin layer and the barrier property after working, a heat treatment is applied during working and/or at an interim stage of working, or at the final stage. Patent Document 2 uses an orientating thermoplastic resin, and Patent Document 3 uses a compound of saturated polyester and ionomer.

Patent Documents 4 and 5 describes methods of relaxing internal stress mainly by applying heat treatment at or above the melting point of the resin, and describe the application of heat treatment at a stage after the can-forming. The strain level of the can is low suggested by the detail description and by the description of examples.

Patent Document 2 proposes heat treatment in order to relax the internal stress and to enhance the orientation crystallization, which method has become common to beverage can and the like. Although Patent Document 2 does not give detail description, the temperature of heat treatment is presumably at or below the melting point since the orientation crystallization is accelerated at or below the melting point. The description and the examples of Patent Document 2 show that the strain level is lower than the strain level specified by the present invention.

[Patent Document 1] Examined Japanese Patent Publication No. 7-106394
[Patent Document 2] Japanese Patent No. 2526725
[Patent Document 3] Japanese Patent Laid-Open No. 2004-148324
[Patent Document 4] Examined Japanese Patent Publication No. 59-35344
[Patent Document 5] Examined Japanese Patent Publication No. 61-22626

The conventional technologies did not propose the method for manufacturing can such as aerosol two-piece can using laminated steel sheet applying high strain. To this point, the inventors of the present invention fabricated two-piece cans using laminated steel sheet applying high strain of the steps of drawing-ironing of the laminated steel sheet to form into a shape of cylinder integrated with bottom, followed by diametral reduction in the vicinity of opening of the cylinder, and found the occurrence of problems characteristic to high strain, specifically the problem of delamination and fracture of resin layer. Investigations of the inventors of the present invention revealed the effectiveness of the heat treatment in qualitative view. However, sole heat treatment was not sufficient, and the delamination of resin layer unavoidably appeared in a zone of high strain. As a result, simple application of related art could not solve the problem of delamination of the resin layer. In addition, there appeared a problem of deterioration of formability of the resin layer during the forming after the heat treatment.

**SUMMARY OF THE INVENTION**

It is an object of the present invention to solve the above problems and to provide a method for manufacturing a two-piece can by employing a laminated steel sheet for two-piece can, which prevents delamination and fracture of the laminate resin layer even when a can of high strain level such as aerosol two-piece can is manufactured. An issue of the present invention is to provide a can of high strain level, such as aerosol two-piece can, using the laminated steel sheet.

An important characteristic required to the resin layer during the high strain forming is the difficulty in orientation. Resin likely orients in the can height direction owing to the compressive deformation in the circumferential direction and to the elongational deformation in the can-height direction. An investigation given by the inventors of the present invention revealed that polyethylene terephthalate copolymers or polybutylene terephthalate copolymers are promising ones for above high strain forming. The investigation also found that, for the polyethylene terephthalate copolymers or polybutylene terephthalate copolymers, specified by the present invention, smaller quantity of copolymerization component causes generation of more cracks (fractures) in parallel with each other in the can-height direction. There was also found that orientation similarly progressed even for the case of applying heat treatment to the can after worked. Then, it was found that increased quantity of the copolymerization component of resin specified in the present invention solves the above problems. The present invention has been derived based on the findings.

The means of the present invention to solve the above problems are the following.

(1) A method for manufacturing a two-piece can, comprising the steps of
multi-stage forming a circular disk of laminated steel sheet,
wherein at least one face of the steel sheet has a copolyester resin layer, which contains at least one diol component selected from the group consisting of ethylene glycol and butylene glycol, a dicarboxylic acid component of terephthalic acid, and 8 to 16 mol% of at least one copolyester component selected from the group consisting of isophthalic acid, diethylene glycol and cyclohexane diol,
wherein the copolyester resin layer has 0.06 or less of plane orientation factor which is defined by the following relation I, and
heating a formed body which satisfies the following relations II, V and VI to a temperature of from 150°C to the melting point of the copolyester resin at an interim stage of manufacturing a final formed body of two-piece can which satisfies the following relations II to IV:

$$\text{plane orientation factor } (N_s) = (N_x + N_y)/2 - N_z \qquad \text{(Relation I)}$$

wherein $N_x$ is the refractive index in the machine direction, $N_y$ is the refractive index in the transverse direction and $N_z$ is the refractive index in the thickness direction of the copolyester resin layer, determined under the condition of: light source of sodium D ray, intermediate liquid of methylene iodide, and temperature of 25°C,

$$d \leq r \qquad \text{(Relation II)}$$

$$0.1 \leq d/R \leq 0.25 \qquad \text{(Relation III)}$$

$$1.5 \leq h/(R - r) \leq 4 \qquad \text{(Relation IV)}$$

$$0.2 \leq d/R \leq 0.5 \qquad \text{(Relation V)}$$

$$1.5 \leq h/(R - r) \leq 2.5 \qquad \text{(Relation VI)}$$

wherein R is a radius of a circular disk, before forming, having the same weight to that of the final formed body, h is a height of a formed body, r is a maximum radius of a formed body, and d is a minimum radius of a formed body.

EP 1 914 065 B1

(2) The method for manufacturing a two-piece can according to (1), wherein the heat treatment is carried out two or more times.

(3) A two-piece can manufactured by the method according to any one of (1) or (2).

**BRIEF DESCRIPTION OF THE DRAWING**

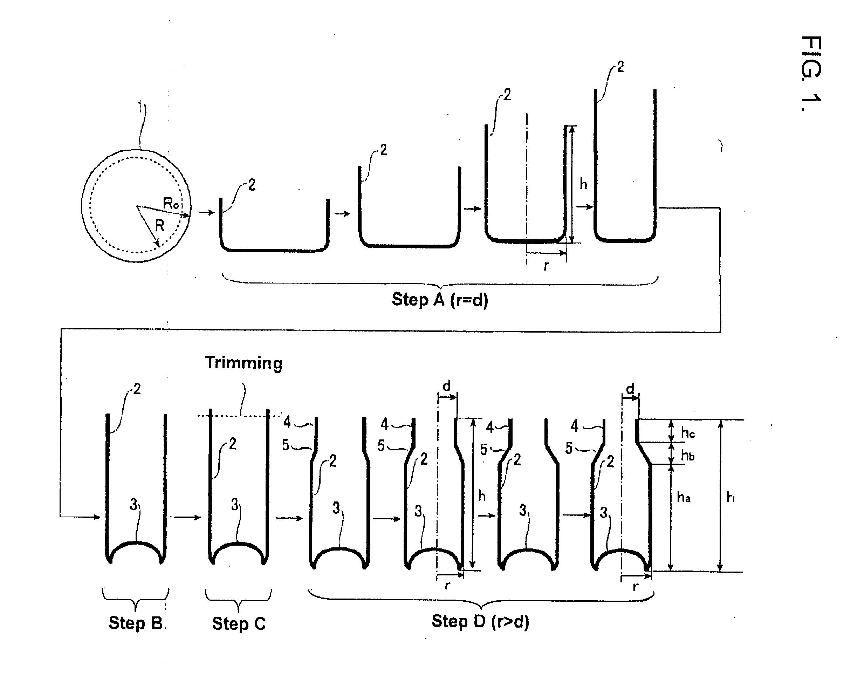

FIGURE 1 illustrates an embodiment of the manufacturing process of can according to the present invention.

**EMBODIMENT FOR CARRYING OUT THE INVENTION**

The embodiment for carrying out the present invention and the reasons of limitations are described below.

FIGURE 1 illustrates an embodiment of the manufacturing process of the can according to the present invention, giving the sequent order of steps of forming a circular blank into a formed body in a shape of cylinder integrated with bottom by drawing (including DI forming), and of applying diametral reduction in the vicinity of opening of the formed body, thus obtaining a two-piece can with a diametral reduction part in the vicinity of the opening.

In FIG. 1, the reference symbol 1 is the circular disk blank (blank sheet) before forming, 2 is the straight wall part as the base part of the formed body, (in the step D, straight wall part not being worked by diametral reduction), 3 is the dome-shaped part, 4 is the straight wall part at the neck-shaped portion being worked by diametral reduction, and 5 is the taper-shape part, or the tapered wall part after worked by diametral reduction.

First, the circular disk blank 1 is subjected to one or plurality steps of drawing (including DI forming) to form a formed body in a shape of cylinder integrated with bottom, having a specified can diameter (radius r: radius of outer face of can), (Step A) . Then, the bottom part of the formed body is subjected to dome- forming, or to form into an upward convex shape to form the dome- shaped part 3, (Step B) . Further the edge of the opening of the formed body is trimmed, (Step C) . Next, the opening of the formed body is subjected to one or pluralities of stages of diametral reduction to bring the opening side of the formed body to a specified can diameter, (radius d: radius of the can outer face), thus obtaining the desired final formed body (two- piece can) . In FIG. 1, the reference symbol $R_0$ is the radius of the circular disk blank 1 before forming, and h, r, and d are the height, the maximum radius, and the minimum radius of the formed body during forming or of the final formed body, respectively, and R is the radius of the circular disk, before forming, having equal weight to that of the final formed body. According to the manufacturing process of the two- piece can, Step A gives the maximum radius equal to the minimum radius, or r = d, while Step D gives r > d.

The radius R of the circular disk, before forming, having the same weight to that of the final formed body is determined based on the measured weight of the final formed body. That is, the weight of the final formed body is measured, and the size (radius) of the circular disk, before forming, having the same weight to the measured weight is determined, which determined size is used as the radius R of the circular disk, before forming, having the same weight to that of the final formed body. The can edge portion is trimmed during the can manufacturing process. Since, however, the radius R of the circular disk, before forming, having the same weight to that of the final formed body eliminates the effect of the trimming, more suitable evaluation of the strain is available.

On the two-piece can which is fabricated by above drawing (including DI working) and diametral reduction applying to the circular disk blank, the resin layer is elongated in the height direction and is compressed in the circumferential direction. When the strain level is high, the deformation of resin becomes large, which leads to fracture of the resin layer. According to the present invention, the index of strain level adopts not only the parameter d/R representing the degree of compression but also the parameter [h/(R - r)] relating to the elongation in the can height direction because the expression of strain level in a high strain zone needs to consider the elongation in addition to the drawing ratio. That is, by specifying the strain level by both the degree of compression and the degree of elongation, the degree of deformation of the resin layer is quantified. By elongation in the height direction and compression in the circumferential direction, the resin layer tends to delaminate, thus the elongation in the height direction becomes an important variable adding to the degree of compression.

According to the present invention, the strain level of finally manufactured can (final formed body) is specified so as the relation of the height h of final formed body, the maximum radius r thereof, the minimum radius d thereof, and the radius R of circular disk, before forming, having the same weight to that of the final formed body, to satisfy [0.1 $\leq$ d/R $\leq$ 0.25] and [1.5 $\leq$ h/(R - r) $\leq$ 4].

As described before, the obj ect of the present invention is to allow laminated steel sheet to manufacture high strain level of can which was difficult to be achieved by conventional technologies. Conventional technologies were difficult to manufacture high strain level of can that satisfies both the parameter d/R specifying the degree of compression not higher than 0.25 and the parameter [h/ (R - r)] specifying the degree of elongation not smaller than 1.5 using laminated steel sheet. Consequently, the present invention specifies the strain level d/R of the manufacturing can to 0.25 or less, and specifies [h/(R - r)] to 1.5 or more.

4

If the strain level is high to give the parameter d/R specifying the degree of compression not higher than 1.0 or the parameter [h/(R-r)] specifying the degree of elongation exceeding 4, the number of forming stages increases even if the forming is available, or the sheet elongation reaches the limit by the progress of work hardening, which causes the sheet fracture problem. Therefore, the present invention specifies the strain level of manufacturing can to [0.1 ≤ d/R] and [h/ (R - r) ≤4].

The multiple stage forming as a target of the present invention is any of drawing, drawing-ironing, diametral reduction, and combination of them. If the diametral reduction is included in the working, the size d of the final formed body is [r > d]. If the diametral reduction is not included, the size of the final formed body is [r = d], (r and d are the radius of final formed body).

The present invention specifies the laminated steel sheet with resin laminate as the metal sheet of base material.

Steel sheet is selected as the base metallic material because steel is more inexpensive and is superior in economy to aluminum. The steel sheet can be ordinary tin-free steel or tinplate. Tin-free steel preferably has a metal chromium layer of 50 to 200 mg/m$^2$ of surface coating weight and a chromium oxide layer of 3 to 30 mg/m$^2$ of coating weight as metal chromium. Tinplate preferably has 0.5 to 15 g/m$^2$ of plating. The sheet thickness is not specifically limited, and that in a range from 0.15 to 0.30 mm, for example, is applicable. If no economic consideration is needed, the technology can simply apply also to aluminum base material.

An important characteristic required to the resin layer during the above-described high strain forming is the difficulty in orientation. Resin likely orients in the can height direction owing to the compressive deformation in the circumferential direction and to the elongational deformation in the can-height direction. An investigation given by the inventors of the present invention found promising resins for the high strain forming in view of difficulty in orientation, which resins are prepared by polycondensation of a dicarboxylic acid component with a diol component, wherein the dicarboxylic acid component has terephthalic acid as the main ingredient and contains or does not contain isophthalic acid as other copolymerization ingredient, and the diol component has ethylene glycol and/or butylene glycol as the main ingredient and contains or does not contain diethylene glycol and cyclohexane diol as other copolymerization ingredient. Consequently, the present invention specifies the kind of the resin in the resin layer to above resin.

The investigation, however, also found that, for the polyethylene terephthalate copolymers or polybutylene terephthalate copolymers, specified by the present invention, the molecules tend to become orientated when the percentage of the copolymerization ingredient is low. That is, smaller quantity of copolymerization component is likely to generate more cracks (fractures) in parallel with each other in the can-height direction in a zone of high strain level. In concrete terms, it was found that, when the orientation in the resin in the can height direction becomes significant, the bonding force in the circumferential direction becomes weak, which results in fracture in the circumferential direction. The orientation similarly progresses even for the case of applying heat treatment to the can after worked. To prevent these problems, the present invention specifies the lower limit of the percentage of the copolymerization ingredient to 8% by mole. From the point of difficulty in orientation, higher percentage of copolymerization ingredient is more preferable. However, the percentage above 16% by mole increases the film cost to deteriorate economy. From this point of view, the present invention specifies the upper limit of the copolymerization percentage to 16% by mole. Therefore, if the cost is not considered, high copolymerization percentage is also suitable in accordance with the technological concept of the present invention.

For the resin layer to follow the deformation occurred accompanied with the high strain level specified by the present invention, it was found that the orientation of laminated steel sheet in the initial stage of working is also an important variable. A film prepared by biaxial orientation or the like is oriented in the plane direction. However, if the film is kept in a high orientation state after laminated, the film cannot follow the working to result in fracture. From this point of view, the present invention specifies the plane-orientation factor to 0.06 or less.

For preparing the laminated steel sheet using a biaxially oriented film with high plane-orientation factor, the temperature during lamination is increased to fully melt the oriented crystals. A film which is prepared by extrusion is suitable in this view because the film is oriented very little. Similarly, the direct lamination method which directly laminates a molten resin on the steel sheet is also suitable because of the same reason as above.

On fabricating the can of high strain level specified by the present invention, delamination of laminate may occur depending on the working condition and the kind of the resin. In such a case, it is effective that one or more times of heat treatment is applied at an interim stage of the multiple stage forming, by heating the formed body to a temperature ranging from 150°C to the melting point of the polyester resin. Although the heat treatment is given to relax the internal stress generated by the working, the relaxation of internal stress affects the recovery of adhesion. That is, the can of high strain level specified by the present invention gives large degree of strain in the resin layer, thus likely inducing large internal stress. As a result, the delamination of resin layer may occur by the internal stress as the driving force. Application of adequate heat treatment in a stage of high internal stress before generating delamination, during the forming process, relaxes the internal stress to prevent the delamination. The heat treatment, however, has a drawback of progress of orientation to crystallize the resin, thus to deteriorate the formability of the resin layer. In particular, in a zone of high strain level specified by the present invention, there may occur a case of need of working after the heat treatment. Since the working after the heat treatment brings the resin to easily fracture owing to the orientation crystallization, the orientation crystallization is harmful.

From this point of view, the present invention specifies the condition and timing of the heat treatment, adding to the limitation of the kind of resin.

The present invention specifies the condition of heat treatment to apply in an interim stage to heat the formed body to a temperature in a range from 150°C to the melting point of the polyester resin. As described above, by selecting a resin of difficult in orienting, the orientation crystallization during heat treatment can be suppressed, and the lower limit of the copolymerization percentage is specified also in this view.

If the heat treatment temperature exceeds the melting point of the polyester resin, there appear harmful phenomena such as rough surface layer and adhesion of resin to other material. On the other hand, the lower limit of the heat treatment is specified taking into account of the efficiency of relaxation of the internal stress. That is, although the relaxation of internal stress proceeds at a temperature at or above the glass transition point of the polyester resin, excessively low temperatures take a time for the relaxation of the stress. In this view, the present invention specifies the lower limit of the heat treatment to 150°C. Therefore, in a manufacturing process which does not care the treatment time, the treatment temperature of 150 °C or below can be adopted on the basis of the technological concept of the present invention. Generally, however, long time of treatment deteriorates the productivity. More preferable condition of heat treatment is between 170°C and [the melting point of polyester resin] - 20°C.

According to the present invention, the timing to conduct the heat treatment is specified to give in an interim stage which satisfies the relation of the height h of formed body at the interim stage, the maximum radius r thereof, the minimum radius d (including the case that r and d are equal) thereof, with the radius R of the circular disk, before forming, having the same weight to that of the final formed body, as $[0.2 \leq d/R \leq 0.5]$ and $[1.5 \leq h/(R - r) \leq 2.5]$.

The above timing of heat treatment is specified because most effective heat treatment can be provided when the strain level is in that range. That is, the heat treatment in a stage of mild strain level gives only a small effect because the relaxation of internal stress is conducted in a stage of not-high internal stress. The heat treatment in a stage of excessively high strain level deteriorates the adhesion, thus delamination may occur, which timing is too late. From this point of view, the upper limit and the lower limit of the strain level are specified as above.

The method of heat treatment is not specifically limited, and it was confirmed that electric oven, gas oven, infrared furnace, and induction heater gave similar effect. Heating rate, heating time, and cooling time (the time between the completion of heat treatment and the cooling to the glass transition point of resin) are adequately selected considering the positive effect of relaxing the internal stress and the negative effect of orientation crystallization. Higher heating rate is more efficient, and an adequate range of heating time is from about 15 seconds to about 60 seconds. The heating time is, however, not limited to the range. Long cooling time is not preferable in terms of quality because the amount of generated spherulites increases. Consequently, shorter cooling time is better.

The laminated steel sheet employed in the method specified by the present invention may contain additives such as pigment, lubricant, and stabilizer in the resin layer, and adding to the resin layer specified by the present invention, a resin layer having other functions may be located at upper layer or at intermediate layer above the steel sheet.

Although thinner resin layer deteriorates formability, the resin layer specified by the present invention provides good formability even at a thin layer. The thickness of the resin layer is adequately selected depending on the strain level and other required characteristics. For example, the thickness thereof between 5 to 50 $\mu$m is suitably applied. In particular, a thin resin layer of 20 $\mu$m or less is a zone of high contribution of the effect of the present invention.

The laminated steel sheet employed in the method specified by the present invention is required to have a laminate of resin layer specified by the present invention at least one side of the steel sheet.

The lamination method for the steel sheet is not specifically limited, and the method is adequately selected such as the heat lamination method which thermally bonds a biaxially oriented film or non-oriented film, and the extrusion method which directly forms a resin layer on the steel sheet using T-die and the like. Both of the methods were confirmed to give sufficient effect.

EXAMPLE 1

The examples of the present invention are described below.

[Preparation of laminated steel sheet]

The substrate metal sheet was 0.20 mm thick T4CA, TFS (120 mg/m$^2$ of metal Cr layer, 10 mg/m$^2$ of chromium oxide layer as metal Cr). Onto the original sheet, various kinds of resin layers were formed using the film-lamination method (heat lamination method) or the direct-lamination method (direct extrusion method). For the film-lamination method, two kinds of the methods were applied, using a biaxially oriented film and a non-oriented film. On both sides of the metal sheet, each film having 20 $\mu$m in thickness was laminated.

The plane orientation factor of the laminate film on thus prepared laminated steel sheet was determined by the following procedure.

**[Determination of plane orientation factor]**

Abbe's refractometer was used to determine the refractive index under the condition of: light source of sodium/D ray; intermediate liquid of methylene iodide; and temperature of 25°C. The determined refractive indexes were Nx in the machine direction, Ny in the transverse direction, and Nz in the thickness direction of the film. Then, the plane orientation factor Ns was calculated by the following formula.

```
Plane orientation factor (Ns) = (Nx + Ny)/2 - Nz
```

TABLE 1 shows the manufacturing method and the characteristics of the laminated steel sheet.
The lamination methods are the following.
Heat lamination method 1: A film prepared by the biaxial orientation method was thermocompressed on a steel sheet which was heated to [the melting point of resin + 10°C] using a nip roll. Then the film was cooled within 7 seconds by water.
Heat lamination method 2: A non-oriented film was thermocompressed on a steel sheet which was heated to [the melting point of resin + 10°C] using a nip roll. Then the film was cooled within 7 seconds by water.
Direct extrusion method: Resin pellets were kneaded and melted in an extruder, which were then extruded through a T-die to laminate onto a running steel sheet. The steel sheet with the resin laminate was nip-cooled on a cooling roll at 80°C, and was further cooled by water.

**TABLE 1.**

| Tested steel sheet No. | Kind of resin | Percentage of copolymerization ingredient (mol %) | Melting point (°C) | Lamination method | Plane orientation factor | Remark |
|---|---|---|---|---|---|---|
| A1 | PET-I | 8 | 238 | Heat lamination method 1 | 0.02 | Steel sheet of the invention |
| A2 | PET-I | 10 | 233 | Heat lamination method 1 | 0.02 | Steel sheet of the invention |
| A3 | PET-I | 12 | 228 | Heat lamination method 1 | 0.02 | Steel sheet of the invention |
| A4 | PET-I | 14 | 223 | Heat lamination method 1 | 0.02 | Steel sheet of the invention |
| A5 | PET-I | 16 | 218 | Heat lamination method 1 | 0.02 | Steel sheet of the invention |
| A6 | PET-I | 12 | 228 | Heat lamination method 1 | 0.06 | Steel sheet of the invention |
| A7 | PET-I | 12 | 228 | Heat lamination method 1 | 0.04 | Steel sheet of the invention |
| A8 | PET-I | 12 | 228 | Heat lamination method 1 | 0.01 | Steel sheet of the invention |

(continued)

| Tested steel sheet No. | Kind of resin | Percentage of copolymerization ingredient (mol %) | Melting point (°C) | Lamination method | Plane orientation factor | Remark |
|---|---|---|---|---|---|---|
| A9 | PET-I | 12 | 228 | Heat lamination method 1 | <0.01 | Steel sheet of the invention |
| A10 | PET-I | 12 | 228 | Heat lamination method 2 | <0.01 | Steel sheet of the invention |
| A11 | PET-I | 12 | 228 | Direct extrusion method | <0.01 | Steel sheet of the invention |
| A12 | PET-I | 12 | 202 | Heat lamination method 2 | <0.01 | Steel sheet of the invention |
| A13 | PET-PBT (60)-I | 12 | 211 | Heat lamination method 2 | <0.01 | Steel sheet of the invention |
| A14 | PET-DEG | 12 | 225 | Heat lamination method 2 | <0.01 | Steel sheet of the invention |
| A15 | PET-CHDM | 12 | 224 | Heat lamination method 2 | <0.01 | Steel sheet of the invention |
| A16 | PET-I | 4 | 248 | Heat lamination method 1 | 0.02 | Steel sheet of Comparative Example |
| A17 | PET-I | 2 | 253 | Heat lamination method 1 | 0.02 | Steel sheet of Comparative Example |
| A18 | PET-I | 12 | 228 | Heat lamination method 1 | 0.08 | Steel sheet of Comparative Example |
| A19 | PET | 0 | 258 | Heat lamination method 1 | 0.02 | Steel sheet of Comparative Example |

PET : Polyethylene terephthalate PET-I : Copolymer of polyethylene terephthalate and isophthalate (isophthalic acid copolymerization percentage: 12 mol%) PET-PBT(60)-I : Copolymer of polyethylene terephthalate, butylene terephthalate, and isophthalate (Butylene terephthalate copolymerization percentage: 60 mol%, isophthalic acid copolymerization percentage: 12 mol%) PET-DEG : Copolymer of terephthalic acid, ethylene glycol, and diethylene glycol PET-CHDM : Copolymer of terephthalic acid, ethylene glycol, and cyclohexane dimethanol

**[Can forming]**

Using the prepared testing steel sheet, the can (final formed body) was manufactured in accordance with the manufacturing steps shown in FIG. 1, following the procedure described below. TABLE 2 shows the shape of the intermediate formed body (Step C) and the final formed body (Step D). The drawing in Step A was given by five stages, while the diametral reduction in Step D was given by seven stages. The heat treatment was given at a stage between Step A and Step D, heating the can using an infrared heating furnace. After the heat treatment, the can was cooled by water. TABLE 3 shows the timing of heat treatment (strain level of the can when the heat treatment is performed) and the condition of heat treatment.

In TABLE 2, the reference symbols h, r, d, ha, hc, and R of the final formed body (Step D) are the height of the final formed body up to the opening end, the radius of the base part 2, the radius of the neck-shaped part 3, the height of the base part 2, the height of the neck-shaped part 3, and the radius of the circular disk blank, before forming, having the same weight to that of the final formed body, respectively, (refer to FIG. 1). The radius R of the circular disk blank was determined by the following procedure. The weight of the blank sheet before forming and the weight of the final formed body after the step of trimming were measured. Based on thus measured weights, the radius of the blank sheet, before forming, having the same weight to that of the final formed body was determined. Thus determined radius was adopted as the radius R of the circular disk blank, before forming, having the same weight to that of the final formed body.

**TABLE 2**

| Can shape | Blank diameter $R_o$ (mm) | Intermediate formed body (Step C) | | Final formed body (Step D) | | | | | | | | Change rate of sheet thickness ** |
|---|---|---|---|---|---|---|---|---|---|---|---|---|
| | | r (mm) | h (mm) | r (mm) | d (mm) | h (mm) | ha (mm) | hc (mm) | Blank diameter R* (mm) | d/R | h/(R-r) | |
| B1 | 41.0 | 11.0 | 63.6 | 11.0 | 7.8 | 65.9 | 47.0 | 9.9 | 40.4 | 0.19 | 2.24 | 1.20 |
| B2 | 47.0 | 11.0 | 63.5 | 11.0 | 7.8 | 65.9 | 47.0 | 9.9 | 46.6 | 0.17 | 1.85 | 1.45 |
| B3 | 35.5 | 11.0 | 63.5 | 11.0 | 7.8 | 65.9 | 47.0 | 9.9 | 34.8 | 0.22 | 2.77 | 0.75 |
| B4 | 33.0 | 11.0 | 63.5 | 11.0 | 7.8 | 65.9 | 47.0 | 9.9 | 32.2 | 0.24 | 3.11 | 0.65 |

*) The blank diameter R is derived from conversion of the weight of the final formed body.

**) Change rate of sheet thickness = Sheet thickness at the thinnest portion of the can / Thickness of the blank sheet. Both are the steel sheet thickness.

**TABLE 3**

| Can No. | Testing steel sheet No. | Melting point of resin (°C) | Strain level at heat treatment | | Condition of heat treatment | | Final can shape | Film formabil ity | Film adhesion | Remark |
|---|---|---|---|---|---|---|---|---|---|---|
| | | | d/R | h/(R-r) | Temperature (°C) | Time (sec.) | | | | |
| C1 | A3 | 228 | 0.38 | 1.78 | 220 | 30 | B1 | ○ | ◎ | Example of the invention |
| C2 | A3 | 228 | 0.38 | 1.78 | 220 | 60 | B1 | ○ | ◎ | Example of the invention |
| C3 | A3 | 228 | 0.38 | 1.78 | 220 | 90 | B1 | ○ | ◎ | Example of the invention |
| C4 | A3 | 228 | 0.38 | 1.78 | 220 | 120 | B1 | ○ | ◎ | Example of the invention |
| C5 | A3 | 228 | 0.38 | 1.78 | 228 | 30 | B1 | ○ | ◎ | Example of the invention |
| C6 | A3 | 228 | 0.38 | 1.78 | 160 | 80 | B1 | ○ | ◎ | Example of the invention |
| C7 | A3 | 228 | 0.38 | 1.78 | 180 | 60 | B1 | ○ | ◎ | Example of the invention |
| C8 | A3 | 228 | 0.38 | 1.78 | 200 | 45 | B1 | ○ | ◎ | Example of the invention |
| C9 | A3 | 228 | 0.38 | 1.78 | 220 | 30 | B1 | ○ | ◎ | Example of the invention |
| C10 | A3 | 228 | 0.30 | 2.10 | 220 | 30 | B1 | ○ | ◎ | Example of the invention |
| C11 | A3 | 228 | 0.47 | 1.53 | 220 | 30 | B1 | ○ | ◎ | Example of the invention |
| C12 | A3 | 228 | 0.28 | 1.80 | 220 | 30 | B2 | ○ | ◎ | Example of the invention |
| C13 | A3 | 228 | 0.31 | 1.70 | 220 | 30 | 82 | ○ | ◎ | Example of the invention |
| C14 | A3 | 228 | 0.50 | 2.30 | 220 | 30 | B3 | ○ | ◎ | Example of the invention |
| C15 | A3 | 228 | 0.23 | 2.70 | 220 | 30 | B3 | ○ | ◎ | Example of the invention |
| C16 | A3 | 228 | 0.55 | 0.20 | 220 | 30 | B3 | ○ | ○ | Example * |
| C17 | A3 | 228 | 0.40 | 2.80 | 220 | 30 | B4 | ○ | ○ | Example * |
| C18 | A3 | 228 | 0.35 | 2.90 | 220 | 30 | B4 | ○ | ○ | Example * |
| C19 | A3 | 228 | 0.23 | 3.05 | 220 | 30 | B4 | ○ | ○ | Example * |
| C20 | A3 | 228 | Without heat treatment | | | | B3 | ○ | ○ | Example * |
| C21 | A3 | 228 | 0.38 | 1.78 | 220 | 30 | B1 | ○ | ◎ | Example of the invention |
| C22 | A3 | 228 | 0.38 | 1.78 | 220 | 30 | B1 | ○ | ◎ | Example of the invention |

(continued)

| Can No. | Testing steel sheet No. | Melting point of resin (°C) | Strain level at heat treatment | | Condition of heat treatment | | Final can shape | Film formabil ity | Film adhesion | Remark |
|---|---|---|---|---|---|---|---|---|---|---|
| | | | d/R | h/(R-r) | Temperature (°C) | Time (sec.) | | | | |
| C23 | A1 | 238 | 0.38 | 1.78 | 230 | 30 | B1 | ○ | ◎ | Example of the invention |
| C24 | A2 | 233 | 0.38 | 1.78 | 230 | 30 | B1 | ○ | ◎ | Example of the invention |
| C25 | A4 | 223 | 0.38 | 1.78 | 215 | 30 | B1 | ○ | ◎ | Example of the invention |
| C26 | A5 | 218 | 0.38 | 1.78 | 210 | 30 | B1 | ○ | ◎ | Example of the invention |
| C27 | A6 | 228 | 0.38 | 1.78 | 220 | 30 | B1 | ○ | ◎ | Example of the invention |
| C28 | A7 | 228 | 0.38 | 1.78 | 220 | 30 | B1 | ○ | ◎ | Example of the invention |
| C29 | A8 | 228 | 0.38 | 1.78 | 220 | 30 | B1 | ○ | ◎ | Example of the invention |
| C30 | A9 | 228 | 0.38 | 1.78 | 220 | 30 | B1 | ○ | ◎ | Example of the invention |
| C31 | A10 | 228 | 0.38 | 1.78 | 220 | 30 | B1 | ○ | ◎ | Example of the invention |
| C32 | A11 | 228 | 0.38 | 1.78 | 220 | 30 | B1 | ○ | ◎ | Example of the invention |
| C33 | A12 | 202 | 0.38 | 1.78 | 220 | 30 | B1 | ○ | ◎ | Example of the invention |
| C34 | A13 | 211 | 0.38 | 1.78 | 205 | 30 | B1 | ○ | ◎ | Example of the invention |
| C35 | A14 | 225 | 0.38 | 1.78 | 220 | 30 | B1 | ○ | ◎ | Example of the invention |
| C36 | A15 | 224 | 0.38 | 1.78 | 220 | 30 | B1 | ○ | ◎ | Example of the invention |
| C37 | A16 | 248 | 0.38 | 1.78 | 240 | 30 | B1 | × | ◎ | Comparative Example |
| C38 | A17 | 253 | 0.38 | 1.78 | 245 | 30 | B1 | × | ◎ | Comparative Example |
| C39 | A18 | 228 | 0.38 | 1.78 | 220 | 30 | B1 | × | ○ | Comparative Example |
| C40 | A19 | 258 | 0.38 | 1.78 | 250 | 30 | B1 | × | ◎ | Comparative Example |

* not within the scope of the present invention

1) Blanking (66 to 94 mmφ)

2) Drawing and ironing (Step A)

Through the five stages of drawing, the cans (intermediate formed bodies) having radius r and height h of the

12

can in a range of r/R from 0.27 to 0.34 and of [h/(R- r)] from 1.84 to 3.09, were manufactured. To manufacture the desired cans, ironing was also applied at need.

3) Forming of dome-shape at can bottom (Step B)

Stretching was applied to the can bottom to a hemispherical shape of 6 mm in depth.

4) Trimming (Step C)

The can top edge portion was trimmed by about 2 mm.

5) Diametral reduction at opening portion of the cylinder (Step D)

Diametral reduction was given to the opening portion of the cylinder. In concrete terms, the diametral reduction was conducted by the die-neck method in which the opening end was pressed against a die in an inside-tapered shape, thus manufactured the cans having final can shape given in TABLE 2.
For the cans manufactured by the above procedure, evaluation was given in terms of the adhesion of the film layer to the can, the formability of the film layer, and the appearance of the film layer. The results of the evaluation are also given in TABLE 3.

[Adhesion test]

The can was sheared in approximately rectangular shape in the can height direction, having 15 mm of width in the circumferential direction. With thus sheared piece, only the steel sheet was sheared at a position of 10 mm from the bottom in the can height direction, straight in the circumferential direction. As a result, there was prepared a test piece having a 10 mm portion in the can height direction toward the can bottom and a residual portion with the boundary of the sheared position. At the 10 mm portion, a steel sheet having 15 mm in width and 60 mm in length was joined (welded). Then, the 60 mm steel sheet portion was clamped to forcefully separate the film on the residual portion by about 10 mm from the sheared position. The peeling test was conducted in 180° direction with the clamping areas of the film-separated portion and the 60 mm steel sheet portion. The minimum peeling strength among the observed values was adopted as the index of adhesion.

[Peeling strength]

Less than 4N/15 mm: ✕
4N/15 mm or more and less than 6N/15mm: ○
6N/15 mm or more: ◎

[Evaluation of film formability]

The outer surface of the resin layer after the can forming was observed visually and with a light microscope to confirm the presence/absence of fracture of film. The resin layer giving normal appearance was evaluated as ○, and the  resin layer showing fracture and crack was evaluated as ✕.

[Results of evaluation]

The cans C1 to C15 and C21 to C36 are the examples of the present invention, and were subjected to heat treatment within the range specified by the present invention. They showed good film formability and adhesion.
The cans C16 to C20 are examples not within the scope of the present invention. They were not subjected to heat treatment specified by the third aspect of the present invention, or they were subjected to the heat treatment outside the timing specified by the fourth aspect of the present invention. As a result, they gave only ○ evaluation for the adhesion, though both the film formability and the adhesion passed the evaluation.
The cans C37, C38, and C40 are Comparative Examples. The evaluation of formability was ✕ because the copolymerization percentage of isophthalic acid was outside the range of the present invention.
The can C39 is an example giving the plane orientation factor outside the range of the present invention, and the formability was evaluated to ✕.

**Claims**

1. A method for manufacturing a two-piece can, comprising the steps of
   multi-stage forming a circular disk of laminated steel sheet,
   wherein at least one face of the steel sheet has a copolyester resin layer, which contains at least one diol component selected from the group consisting of ethylene glycol and butylene glycol, a dicarboxylic acid component of terephthalic acid, and 8 to 16 mol% of at least one copolyester component selected from the group consisting of isophthalic acid, diethylene glycol and cyclohexane diol,
   wherein the copolyester resin layer has 0.06 or less of plane orientation factor which is defined by the following relation I, and
   heating a formed body which satisfies the following relations II, V and VI to a temperature of from 150°C to the melting point of the copolyester resin at an interim stage of manufacturing a final formed body of two-piece can which satisfies the following relations II to IV:

   $$\text{plane orientation factor } (Ns) = (Nx + Ny)/2 - Nz \qquad \text{(Relation I)}$$

   wherein Nx is the refractive index in the machine direction, Ny is the refractive index in the transverse direction and Nz is the refractive index in the thickness direction of the copolyester resin layer, determined under the condition of: light source of sodium D ray, intermediate liquid of methylene iodide, and temperature of 25°C,

   $$d \leq r \qquad \text{(Relation II)}$$

   $$0.1 \leq d/R \leq 0.25 \qquad \text{(Relation III)}$$

   $$1.5 \leq h/(R - r) \leq 4 \qquad \text{(Relation IV)}$$

   $$0.2 \leq d/R \leq 0.5 \qquad \text{(Relation V)}$$

   $$1.5 \leq h/(R - r) \leq 2.5 \qquad \text{(Relation VI)}$$

   wherein R is a radius of a circular disk, before forming, having the same weight to that of the final formed body, h is a height of a formed body, r is a maximum radius of a formed body, and d is a minimum radius of a formed body.

2. The method for manufacturing a two-piece can according to claim 1, wherein the heat treatment is carried out two or more times.

3. A two-piece can manufactured by the method according to any one of claims 1 or 2.


**Patentansprüche**

1. Verfahren zur Herstellung einer zweiteiligen Dose, umfassend die Stufen:

   mehrstufiges Formen einer kreisrunden Scheibe eines laminierten Stahlblechs,
   wobei mindestens eine Fläche des Stahlblechs eine Copolyesterharzschicht aufweist, wobei die Copolyesterharzschicht mindestens eine Diolkomponente, die aus der Gruppe von Ethylenglykol und Butylenglykol ausgewählt ist, eine Dicarbonsäurekomponente aus Terephthalsäure und 8 bis 16 Mol-% an mindestens einer Copolyesterkomponente, die aus der Gruppe von Isophthalsäure, Diethylenglykol und Cyclohexandiol ausgewählt ist, enthält,
   wobei die Copolyesterharzschicht einen
   Ebenenausrichtungsfaktor, der durch die im folgenden angegebene Beziehung I definiert ist, von 0,06 oder weniger aufweist, und Erhitzen eines Formkörpers, der die im folgenden angegebenen Beziehungen II, V und VI erfüllt, auf eine Temperatur von 150°C bis zum Schmelzpunkt des Copolyesterharzes in einem Zwischenstadium der Herstellung eines fertigen Formkörpers einer zweiteiligen Dose, der die im folgenden angegebenen Beziehungen II bis IV erfüllt:

$$\text{Ebenenausrichtungsfaktor } (Ns) = (Nx+Ny)/2-Nz \quad \text{(Beziehung I)}$$

wobei Nx für den Brechungsindex in Bearbeitungsrichtung, Ny für den Brechungsindex in der Querrichtung und Nz für den Brechungsindex in der Dickenrichtung der Copolyesterharzschicht steht, wobei diese unter der Bedingung von Natrium-D-Strahlung als Lichtquelle, Methyleniodid als Zwischenflüssigkeit und einer Temperatur von 25°C bestimmt wurden,

$$d \leq r \quad \text{(Beziehung II)}$$

$$0,1 \leq d/R \leq 0,25 \quad \text{(Beziehung III)}$$

$$1,5 \leq h/(R - r) \leq 4 \quad \text{(Beziehung IV)}$$

$$0,2 \leq d/R \leq 0,5 \quad \text{(Beziehung V)}$$

$$1,5 \leq h/(R - r) \leq 2,5 \quad \text{(Beziehung VI)}$$

wobei R für den Radius einer kreisrunden Scheibe vor dem Formen mit dem gleichen Gewicht wie das des fertigen Formkörpers steht, h für die Höhe eines Formkörpers steht, r für den maximalen Radius eines Formkörpers steht und d für den minimalen Radius eines Formkörpers steht.

2. Verfahren zur Herstellung einer zweiteiligen Dose nach Anspruch 1, wobei die Wärmebehandlung zweimal oder öfter durchgeführt wird.

3. Zweiteilige Dose, die nach dem Verfahren gemäß einem der Ansprüche 1 oder 2 hergestellt wurde.

**Revendications**

1. Procédé de fabrication d'une canette en deux parties comprenant les étapes consistant à mettre en forme en plusieurs étapes un disque circulaire d'une feuille en acier laminé, dans lequel au moins une face de la feuille d'acier a une couche de résine de copolyester, qui comprend au moins un composant diol choisi dans le groupe constitué par l'éthylène glycol et le butylène glycol, un composant acide dicarboxylique d'acide téréphtalique, et de 8 à 16 % en moles d'au moins un composant copolyester choisi dans le groupe constitué par l'acide isophtalique, le diéthylène glycol et le cyclohexane diol, dans lequel la couche de résine de copolyester a un facteur d'orientation dans le plan inférieur ou égal à 0,06 qui est défini par la relation I suivante, et chauffer un corps mis en forme qui satisfait les relations II, V et VI suivantes d'une température de 150 °C à la température du point de fusion de la résine de copolyester à un stade intermédiaire de fabrication d'un corps mis en forme final d'une cannette en deux parties qui satisfait les relations II à IV suivantes :

$$\text{facteur d'orientation dans le plan } (Ns) = (Nx+Ny)/2-Nz$$

$$\text{(relation I)}$$

où Nx est l'indice de réfraction dans le sens de la machine, Ny est l'indice de réfraction dans le sens transversal et Nz est l'indice de réfraction dans le  sens de l'épaisseur de la couche de résine de copolyester, déterminés dans les conditions de source lumineuse de rayon D de sodium, liquide intermédiaire d'iodure de méthylène et température de 25 °C,

$$d \leq r \qquad\qquad\qquad (\text{relation II})$$

$$0,1 \leq d/R \leq 0,25 \qquad\qquad (\text{relation III})$$

$$1,5 \leq h/(R - r) \leq 4 \qquad\qquad (\text{relation IV})$$

$$0,2 \leq d/R \leq 0,5 \qquad\qquad (\text{relation V})$$

$$1,5 \leq h/(R - r) \leq 2,5 \qquad\qquad (\text{relation VI})$$

dans lesquelles R est un rayon d'un disque circulaire, avant la formation, ayant le même poids que celui du corps mis en forme final, h est une hauteur d'un corps mis en forme, r est un rayon maximal d'un corps mis en forme, et d est un rayon minimal d'un corps mis en forme.

2. Procédé de fabrication d'une canette en deux parties selon la revendication 1, dans lequel le traitement thermique est réalisé deux fois ou plus.

3. Canette en deux parties fabriquée par le procédé selon l'une quelconque des revendications 1 ou 2.

# FIG. 1.

**EP 1 914 065 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7106394 A
- JP 2526725 B
- JP 2004148324 A
- JP 59035344 A
- JP 61022626 A